(19) **Europäisches Patentamt / European Patent Office / Office européen des brevets**

(11) **EP 3 867 672 B1**

(12) # EUROPEAN PATENT SPECIFICATION

(45) Date of publication and mention of the grant of the patent:
**18.03.2026 Bulletin 2026/12**

(21) Application number: **19786976.1**

(22) Date of filing: **15.10.2019**

(51) International Patent Classification (IPC):
**G02B 3/10** *(2006.01)*    **B29D 11/00** *(2006.01)*
**G02C 7/02** *(2006.01)*    **G02C 7/06** *(2006.01)*

(52) Cooperative Patent Classification (CPC):
**G02C 7/021; B29D 11/00009; B29D 11/00326; B29D 11/0073; G02B 3/10; G02C 7/022; G02C 7/06;** G02C 2202/16; G02C 2202/24

(86) International application number:
**PCT/EP2019/077905**

(87) International publication number:
**WO 2020/078964 (23.04.2020 Gazette 2020/17)**

(54) **IMPROVED OPTICAL ARTICLE INCORPORATING OPTICAL ELEMENTS AND MANUFACTURING METHOD THEREOF**

VERBESSERTER OPTISCHER ARTIKEL MIT OPTISCHEN ELEMENTEN UND HERSTELLUNGSVERFAHREN DAFÜR

ARTICLE OPTIQUE AMÉLIORÉ INCORPORANT DES ÉLÉMENTS OPTIQUES ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2018 EP 18306353**

(43) Date of publication of application:
**25.08.2021 Bulletin 2021/34**

(60) Divisional application:
**23177932.3 / 4 235 276**

(73) Proprietor: **ESSILOR INTERNATIONAL**
**94220 Charenton-Le-Pont (FR)**

(72) Inventors:
• **LE SAUX, Gilles**
**94227 CHARENTON-LE-PONT CEDEX (FR)**
• **MARCHAL, Jeanne**
**94227 CHARENTON-LE-PONT CEDEX (FR)**

• **PLESSIS, Christophe**
**94227 CHARENTON-LE-PONT CEDEX (FR)**
• **UHALTE NOGUES, Sira**
**94227 CHARENTON-LE-PONT CEDEX (FR)**
• **GUILLOU, Hélène**
**94227 CHARENTON-LE-PONT CEDEX (FR)**
• **GACOIN, Eric**
**94227 CHARENTON-LE-PONT CEDEX (FR)**

(74) Representative: **Plasseraud IP**
**104 Rue de Richelieu**
**CS92104**
**75080 Paris Cedex 02 (FR)**

(56) References cited:
EP-A1- 1 640 786    EP-A1- 2 878 989
EP-A1- 3 273 292    EP-A1- 3 311 993
WO-A1-03/056366    WO-A1-2009/005822
WO-A1-2015/037601    WO-A1-91/08104
WO-A1-97/42530    WO-A2-2012/093994
US-A1- 2013 271 840

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE INVENTION

The invention relates to an optical article comprising a base lens substrate covered with an abrasion-resistant coating and having a plurality of optical elements. The invention also relates to a manufacturing method of said optical article.

BACKGROUND OF THE INVENTION

Optical articles such as lenses generally comprise a base-lens substrate which is shaped in order to provide a desired optical power, and an anti-abrasion coating covering at least one surface of the base-lens substrate to prevent the latter from being damaged by scratches.

An anti-abrasion coating, also known as hard coating, provides, according to a favorite embodiment with a bi-layered structure, a hardness gradient from the base-lens substrate to the free surface of the anti-abrasion coating. The upper layer of the coating defines the hardest part of the coating at the free surface thereof and allows a protection against thin particles and thin scratches, while the lower layer of the coating defines the less hard part underneath can absorb shocks provided by bigger particles and prevent formation of larger scratches. It also provides a transition with the hardness of the base-lens substrate to prevent formation of cracks at the interface between the substrate and the abrasion-resistant coating.

For a number of applications, it has been found desirable to provide on the base-lens substrate a plurality of microlenses, providing a local change of the power of the optical article. For instance, it is known from US 2017/0131567 a lens comprising a plurality of microlenses formed on a surface of the lens, the local change of power provided by the microlenses enabling to suppress or slow down the progress of myopia.

It is also known from document WO2016/168746 a lens having a first optical power, the lens comprising an array of microlenses having a second optical power, the microlenses allowing to increase the correction provided by the lens even though the curvature of the lens is limited, or allowing forming multifocal lenses with large areas of different optical powers while not exhibiting sharp steps that are visible at a micro-scale.

It is known from EP2878989 A1 to obtain a plurality of optical elements on a spectacles lens by three dimensional printing and by covering the optical elements by a hard coat.

It is known from EP3273292 A1 to provide a lens with a buried structure having a plurality of optical elements. The optical elements contain two types of optical elements differing by dioptric power which are arranged in a chessboard pattern. The different optical elements enable sharp vision at two different object distances. An abrasion-resistant coating covers the lens and fills the void above the buried structure.

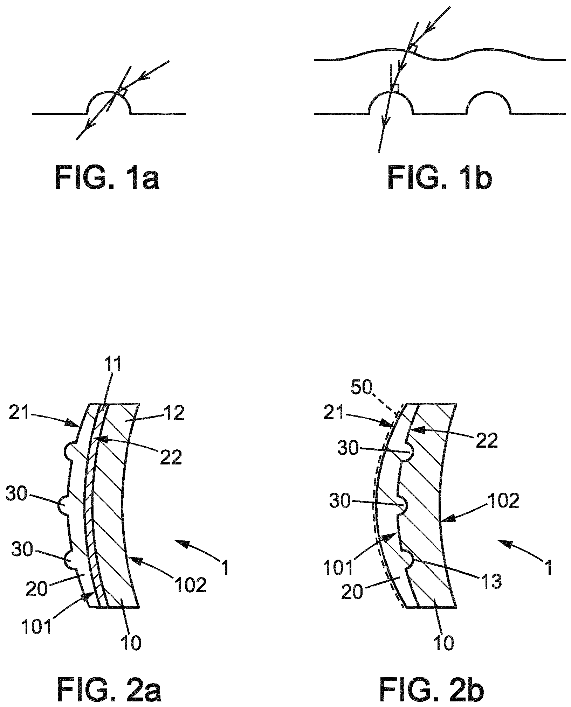

With reference to figures 1a and 1b, the covering of a lens having microlenses with an abrasion-resistant coating changes the power of the microlenses and therefore reduces or impairs the effect provided by the microlenses. Indeed, the thickness of a microlens is of about 1 $\mu$m while the typical thickness of an abrasion-resistant coating is of about 3 $\mu$m. Thus, when a surface comprising protruding elements such as microlenses is covered by abrasion-resistant coating (typically by dipping), the free surface of the abrasion-resistant coating is not exactly of the same curvature than that of the lens it covers. Instead, the presence of the protruding elements causes said free surface to exhibit local deformations of the surface.

As shown on figure 1b, a ray of light incident on one such deformation undergoes a first refraction when entering into the abrasion-resistant coating, and a second refraction at the interface with the microlens of the base-lens substrate, and therefore the path of the ray of light is changed as compared to its path if there was no abrasion-resistant coating (figure 1a). This alters the power of the microlenses. It has been measured that the power P of a microlens is reduced to a power P' of about P-0,8 dioptries up to P-1,3 dioptries when a microlens is covered with an abrasion-resistant coating.

A solution has been proposed consisting of reducing the thickness of the abrasion-resistant coating to reduce this alteration of the microlenses power. However, it has been measured that there still remains an alteration of the power since the local power P' of the microlenses covered with this coating is about P-0,5 (P being the initial power of the microlenses without coating). Furthermore, the properties of protection against scratching of the coating are highly reduced, so this solution is not satisfactory.

The same kind or problem arises for other optical structures which are made in relief from a base-lens substrate. For instance, structures such as Fresnel rings also undergo a perturbation of power when covered by an abrasion-resistant coating.

Another issue arises with some technical permanent markings which are performed on multi-focal lenses to distinguish between a top and a bottom of a lens for later insertion in a frame by an optician. Upon forming an abrasion-resistant coating, the material used to form the coating fills in the groove and makes it invisible.

SUMMARY OF THE INVENTION

The purpose of the invention is to provide a solution to the defects in the prior art.

In particular, one aim of the invention is to provide an optical article comprising a base-lens substrate, an abrasion-resistant coating protecting said substrate, and an optical element, wherein the abrasion-resistant coating does not reduce or suppress the optical effect of the optical element.

The above-mentioned purpose is achieved by the characteristics described in the independent claims, and subordinate claims provide for specific advantageous examples of the invention.

An optical article and a method of manufacturing the same are disclosed.

An optical article is disclosed as defined in claim 1.

In an embodiment, the thickness of a layer composed of the abrasion resistant coating and the optical elements protruding thereof is maximal at an optical element.

In an embodiment, the abrasion resistant coating may be formed of the same material as the one of which are composed the optical elements.

In an embodiment, the optical elements protrude from the second surface of the abrasion resistant coating.

In an embodiment, the optical elements protrude from the first surface of the abrasion resistant coating towards the base lens substrate, and the base lens substrate comprises at least one recess in the surface at the interface with the abrasion resistant coating, said recess having a shape complementary to the shape of the optical elements so that each optical element is received in a respective recess.

In an embodiment, the optical elements define a local change of optical power of the optical device, the material forming the optical elements has an optical index $n_M$, and the base lens substrate has at least one layer in which each recess is formed, said layer being made in a material having an optical index $n_S$ such that the optical index $n_M$ is different from the optical index $n_s$.

In an embodiment, the layer of the base substrate in which each recess is formed has an optical index $n_S$ $n_s < n_M$, and the base substrate further comprises a second layer assembled to the first layer on a surface opposite the surface on which is formed each recess, the second layer having a refraction index $n_{HI}$ greater than the refraction index $n_S$ of the first layer.

In an embodiment, the optical index $n_S$ of the layer of the base lens substrate in which each recess is formed is such that $n_s - n_M \geq 0.1$, , and the optical article further comprises a quarter-wave layer interposed between the abrasion resistant coating and the base substrate.

In an embodiment, the optical elements are chosen among the following group:

- microlens,

- Diffractive structures such as microlenses defining each a Fresnel structure

In an embodiment, the optical device further comprises an anti-reflection coating over said second surface of the abrasion-resistant coating.

In an embodiment, the base lens substrate comprises at least a plano wafer or a base lens having optical power.

A method for manufacturing an optical article is defined in claim 12.

In an embodiment, the abrasion-resistant coating is formed on the front or back surface of the base lens substrate by dipping or spin-coating or additive manufacturing, and the step of forming the plurality of optical elements is made by additive manufacturing or by photolithography or by thermal embossing a base lens substrate covered by an abrasion resistant coating or by injection of a melt polymer into a mold cavity in which an abrasion resistant film is inserted, the melt polymer being injected on the abrasion resistant film pushing the later on the inner surface of an injection mold comprising at least a recess having a shape complementary to the shape of optical elements to be formed.

In an embodiment, the abrasion-resistant coating and the optical elements are composed of a same material and formed simultaneously by molding.

In an embodiment, the molding step comprises :

- providing a mold with a first surface having at least one recess having a shape complementary to the shape of a microelement to be formed,
- depositing a material in a malleable state and adapted to form once hardened, an abrasion resistant coating, on the surface of the mold comprising the at least one recess,
- applying a wafer on the material in the malleable state such that the deposited material in the malleable state spreads over the surface of the wafer and fills in the recess of the corresponding surface of the mold, and
- curing the deposited material with the wafer applied thereon, to obtain an abrasion resistant coating with at least one microelement on one side of the wafer.

In an embodiment, the molding step further comprises steps of:

- closing the mold with a second surface defining with the first surface and a surrounding gasket, a cavity on the side of the support layer opposite to the abrasion resistant coating, filling the cavity with a malleable material adapted to form once hardened a lens,

the base lens substrate comprising the support layer and the lens.

the base lens substrate is also formed by molding, in a mold comprising two walls of given respective curvatures chosen with respect to the respective front and back surface of the base lens substrate to be formed, one of the walls having at least one protruding element of the shape of the optical element to be formed, such that the base lens substrate comprises, on a front or back surface thereof, at least one recess having a shape complementary to the shape of the optical element to be formed, and the subsequent step of molding the abrasion resistant coating and the optical element comprises :

- providing the base lens substrate in a mold, said mold having two walls of given respective curvatures of the same respective curvatures as the walls of the mold used to form the base lens substrate but of protruding elements,
- depositing material adapted to form an abrasion resistant coating between the base lens substrate and a wall of the mold, so that, when the mold is closed, the deposited material spreads over the surface of the base lens having the at least one recess, and
- curing the deposited material.

In an embodiment, the method further comprising forming an anti-reflection coating over the abrasion-resistant coating.

In one embodiment, the abrasion-resistant coating and the optical elements can be formed integrally. Thus the shape of the optical element and its optical power are not impaired by the later deposition of a coating, since it belongs to said coating and therefore the detrimental effects disclosed before related to the deposition of the coating do not happen.

According to an embodiment, the optical elements are protruding from a surface of the abrasion-resistant coating towards the base-lens substrate, in which are performed complementary recesses in which the protruding elements can be received. According to this embodiment, the optical elements are completely contained within the optical article and the outer surfaces of the optical article do not have any relief, which is preferable for subsequent deposition of other functional coatings such as anti-reflective, anti-soiling, or anti-fogging coatings, aesthetic and comfort.

DESCRIPTION OF THE DRAWINGS

For a more complete understanding of the description provided herein and the advantages thereof, reference is now made to the brief descriptions below, taken in connection with the accompanying drawings and detailed description, wherein like reference represent like parts.

Figures 1a and 1b, which have already been described, depict the impact of an abrasion-resistant coating covering a substrate comprising microlenses on the path of an incoming ray of light.

Figures 2a and 2b schematically represent two embodiments of an optical article.

Figure 3a and 3b shown different configurations of an optical article according to the embodiment shown in figure 2b.

Figures 4a shows a phase profile of a lens, figure 4b shows a continuous diffractive profile enabling having the phase profile of figure 4a, and figure 4c shows the configuration of optical elements enabling having the phase profile of figure 4a, whereby figures 4a, 4b and 4c do not fall under the scope of the claims.

Figure 5 schematically shows an installation for manufacturing an optical article according to a first method.

Figures 6a to 6d schematically show the main steps of a second method for manufacturing an optical article.

Figures 7a to 7d schematically show the main steps of a first method for manufacturing an optical article,

Figures 8a to 8e schematically show the main steps of a second method for manufacturing an optical article.

Figures 9 illustrates a diagram of the embossing force and embossing temperature over the time as applied according to a third method for manufacturing an optical article according to the invention.

Figures 10a and 10b show the main steps of the third method for manufacturing an optical article according to the invention

Figure 11 and 12 show respectively 3D measurement of the substrate comprising optical elements of the figure 1a, and of the article of the figure 1b resulting from covering said substrate with an abrasion-resistant coating.

Figure 13 show 3D measurements of the optical article obtained from the third method for manufacturing according to the invention.

DETAILED DESCRIPTION OF AT LEAST ONE EMBODIMENT OF THE INVENTION

*Optical article comprising microelements*

With reference to figures 2a and 2b, an optical article 1 according to embodiments of the invention will now be described. The optical article 1 comprises a base lens substrate 10 and an abrasion-resistant coating 20.

The base lens substrate 10 may comprise a single layer or may be formed of a laminate. The base lens substrate 10 preferably comprises at least a plano wafer 11, or a base lens 12 providing optical power, or both, i.e. a base lens 12 providing optical power and a wafer 11 complementing the base lens 12 with an optical function as described below.

A plano wafer 11 has no optical power and hence provides no correction to the wearer, but acts as a mechanical support for other layers, and optionally also provides one or more functional properties to the finished optical article, such as at least one among the following optical functions:

- Amplitude filtering function,
- Spectral filtering function (such as edgepass like shortpass or longpass, or bandpass filtering, or filtering of specific colors, for instance by tinting, or incorporating photochromic or electrochromic functions, UV absorption, mirror, etc.),
- Polarization function.

A plano wafer 11 refers to a film structure formed by either a single film layer or a film laminate structure formed of multiple film layers attached to one another. More precisely, the plano wafer 11 may be formed by one or several ophthalmic-grade function film (with for example polar or photochromic properties), optionally having an ophthalmic-grade protective film on one or both sides of the ophthalmic grade functional film.

A plano wafer 11 may exhibit a thickness in the range of 20 to 700 micrometers, preferably 30 to 600 $\mu$m. The protective layer(s), if any, may have a thickness of about 50 $\mu$m.

Suitable transparent resin film or sheet materials for forming the plano wafer (including functional and protective films) include poly(vinyl alcohol) (PVA) or cellulose acylate-based materials, for example, cellulose diacetate and cellulose triacetate (TAC). Other usable wafer materials can include polycarbonate, polysulfone, cellulose acetate buturate (CAB) or cyclic oleofin copolymer (COC), polyacrylate, polyester, polystyrene, copolymers of acrylate and styrene, and poly(vinylalcohol) (PVA). Polycarbonate-based materials include, for example, polybisphenol-A carbonate; homopolycarbonate such as 1,1' dihroxydiphenyl-phenylmethylmethane, 1,1'-dihroxydiphenyl-diphenylmethane, 1,1'-dihydroxy-3,3'-dimethyl diphenyl-2,2-propane, their mutual copolymer polycarbonate and copolymer polycarbonate with bisphenol-A.

The base lens 12 may be formed in organic eyeglass, for example made of thermoplastic or thermosetting plastic. In particular, thermoplastic materials may be selected from, for instance: polyamides, polyimide, polysulfones, polycarbonates and copolymers thereof, poly(ethylene terephtalate) and polymethylmethacrylate (PMMA).

Thermosetting materials may be selected from, for instance: cycloolefin copolymers such as ethylene/-norbornene or ethylene/cyclopentadiene copolymers ; homo- and copolymers of allyl carbonates of linear or branched aliphatic or aromatic polyols, such as homopolymers of diethylene glycol bis(allyl carbonate) (CR 39®) ; homo- and copolymers of (meth)acrylic acid and esters thereof, which may be derived from bisphenol A ; polymer and copolymer of thio(meth)acrylic acid and esters thereof, polymer and copolymer of allyl esters which may be derived from Bisphenol A or phtalic acids and allyl aromatics such as styrene, polymer and copolymer of urethane and thiourethane, polymer and copolymer of epoxy, and polymer and copolymer of sulphide, disulfide and episulfide, and combinations thereof. As used herein, a (co)polymer is intended to mean a copolymer or a polymer. As used herein, a (meth)acrylate is intended to mean an acrylate or a methacrylate.

Examples of substrates to be suitably used in the present invention include those obtained from MR6®, MR7®, MR8®, MR174 ® and MR10® resins (thermosetting polythiourethane resins). The various substrates based on polythiourethane resins are marketed by the Mitsui Toatsu Chemicals company and these substrates as well as the monomers used for their preparation are especially described in the patents U.S. Pat. No. 4,689,387, U.S. Pat. No. 4,775,733, U.S. Pat. No. 5,059,673, U.S. Pat. No. 5,087,758 and U.S. Pat. No. 5,191,055.

The base lens 12 is preferably shaped to provide optical power suitable for correcting a wearer ametropia, for instance myopia or hyperopia. The base lens 12 may be monofocal or multifocal such as a multifocal progressive lens.

The base substrate 10 may comprise other layers in addition to the base lens 12 and/or plano wafer 11, such as for instance photochromic trans-bonding® layer on a front surface of a base lens 12, or any additional layer which can be deposited on the base lens or plano wafer and which incorporates an optical function such that :

- Amplitude filtering function,
- Spectral filtering function (such as edgepass like shortpass or longpass, or bandpass filtering, or filtering of specific colors, for instance by tinting, or incorporating photochromic or electrochromic functions, UV absorption, mirror, etc.),
- Polarization function.

As shown in figures 2a to 2d, the base lens substrate 10 comprises a front surface 101 and a back surface 102.

The abrasion resistant coating 20 is preferably formed on the front surface 101 of the base lens substrate 10. The abrasion resistant coating 20 has the role of protecting the base lens substrate 10 from scratches and abrasion. It is also conventionally called Hard-Multilayer coating, HC or HMC.

The abrasion-resistant coating can be any layer conventionally used as abrasion-resistant coating in the field of ophthalmic lenses.

Hard abrasion-resistant and/or scratch-resistant coatings are preferably prepared from compositions comprising at least one alkoxysilane and/or one hydrolyzate of the latter obtained, for example, by hydrolysis with a hydrochloric acid solution. After the hydrolysis stage, the duration of which is generally between 2 h and 24 h, preferably between 2 h and 6 h, catalysts can optionally be added. A surface-active compound is preferably also added in order to promote the optical quality of the deposit.

Mention may be made, among the coatings recommended in the present invention, of coatings based on epoxysilane hydrolyzates, such as those described in the patents EP 0 614 957, US 4 211 823 and US 5 015 523.

A preferred composition for an abrasion-resistant coating is that disclosed in the patent FR 2 702 486 on behalf of the applicant. It comprises an epoxytrialkoxysilane and dialkyldialkoxysilane hydrolyzate, colloidal silica and a catalytic amount of aluminum-based curing catalyst, such as aluminum acetylacetonate, the remainder being essentially composed of solvents conventionally used for the formulation of such compositions. Preferentially, the hydrolyzate used is a γ-glycidoxypropyltrimethoxysilane (GLYMO) and dimethyldiethoxysilane (DMDES) hydrolyzate or else a γ- glycidoxypropyltrimethoxysilane (GLYMO) and triethyl orthosilicate (TEOS) hydrolyzate.

The abrasion resistant coating 20 can be a bi-layered structure forming a hardness gradient from the base-lens substrate 10 to the free surface of the anti-abrasion coating. The upper layer of the coating defines the hardest part of the coating at the free surface thereof and allows a protection against thin particles and thin scratches, while the lower layer of the coating defines the less hard part underneath, able to absorb shocks provided by bigger particles and prevent formation of larger scratches.

Such bi-layered structure of hard coat can be the one of the structures disclosed in the document EP 2 092 377.

Compositions of materials suitable for forming abrasion resistant coating and which can be used in additive manufacturing or inkjet printing may be found in document US2007238804.

The abrasion resistant coating 20 comprises a front surface 21 and a back surface 22, one of the surfaces being at the interface with the base-lens substrate 10. In the case where the abrasion resistant coating 20 covers the front surface 201 of the base-lens substrate 10, the interface between the coating 20 and the base lens substrate 10 thus comprises the back surface 22 of the coating 20 and the front surface 101 of the base lens substrate.

As shown in figures 2a and 2b, the optical article 1 further comprises at least one optical element 30 protruding from one of the front and back surfaces of the abrasion resistant coating 20, said optical element 30 being formed in a material suitable for forming an abrasion resistant coating 20 such as one of those listed above. By "protruding" is meant that each optical element projects from the surface of the abrasion resistant coating 20, outwardly, i.e. away from the coating 20.

In one embodiment, each optical element 30 is formed of the same material as the abrasion resistant coating 20 and may be formed integral with the latter.

The optical element can be any kind of microelement, i.e. a microelement forming a discrete island or slot of the microscopic scale, or a rib of any form such as a ring, the width and/or the height of which being of the microscopic scale, protruding from the base surface of the abrasion-resistant coating.

The optical elements can be dimensioned, formed and organized to constitute any kind of optical functions, such as microlenses as disclosed in US2017/0131567 and WO2016/168746, Fresnel microstructures such as disclosed in EP 2 787 385 or WO 2014060552and/or technical or non technical marking such as the ones disclosed in EP2604415.

In embodiments, the optical elements induce a local change in optical power of the optical device.

The optical elements are configured so that at least along one section of the lens the mean sphere of the optical elements increases from a point of said section towards the peripheral of said section.

According to an embodiment of the invention the optical elements are configured so that at least along one section of the lens, for example at least the same section as the one along which the mean sphere of the optical elements increases, the mean cylinder increases from a point of said section, for example the same point as for the mean sphere, towards the peripheral part of said section.

According to an embodiment of the invention, the at least one, for example all, of the optical element having is, for example are, micro-lens.

A microlens may be spherical, toric, or have an aspherical shape. A microlens may have a single focus point, or cylindrical power, or non-focusing point. In preferred embodiments, microlenses can be used to prevent progression of myopia or hyperopia. In that case, the base lens substrate comprises a base lens 12 providing an optical power for correcting myopia or hyperopia, and the microlenses may provide respectively an optical power greater than the optical power of the base lens 12 if the wearer has myopia, or an optical power lower than the opical power of the base lens 12 is the wearer has hyperopia.

In the sense of the invention, a "micro-lens" has a contour shape being inscribable in a circle having a diameter greater than or equal to 0.8 mm and smaller than or equal to 3.0 mm.

The optical elements may be configured so that along the at least one section of the lens the mean sphere and/or the mean cylinder of optical elements increases from the center of said section towards the peripheral part of said section.

For example, the optical elements may be regularly distributed along circles centered on the optical center of the refraction area.

The optical elements on the circle of diameter 10 mm and centered on the optical center of the refraction area may be micro lenses having a mean sphere of 2.75 D.

The optical elements on the circle of diameter 20 mm and centered on the optical center of the refraction area may be micro lenses having a mean sphere of 4.75 D.

The optical elements on the circle of diameter 30 mm and centered on the optical center of the refraction area may be micro lenses having a mean sphere of 5.5 D.

The optical elements on the circle of diameter 40 mm and centered on the optical center of the refraction area may be micro lenses having a mean sphere of 5.75 D.

The mean cylinder of the different micro lenses may be adjusted based on the shape of the retina of the person.

According to an embodiment of the invention, the refraction area comprises a far vision reference point, a near vision reference, and a meridian line joining the far and near vision reference points. For example, the refraction area may comprise a progressive additional lens design adapted to the prescription of the person or adapted to slow down the progression of the abnormal refraction of the eye of the person wearing the lens element.

The meridian line corresponds to the locus of the intersection of the main gaze direction with the surface of the lens.

Preferably, according to such embodiment, the optical elements are configured so that in standard wearing conditions along any horizontal section of the lens the mean sphere and/or the mean cylinder of the optical elements increases from the intersection of said horizontal section with the meridian line towards the peripheral part of the lens.

The mean sphere and/or the mean cylinder increase function along the sections may be different depending on the position of said section along the meridian line.

In particular, the mean sphere and/or the mean cylinder increase function along the sections are unsymmetrical. For example, the mean sphere and/or the mean cylinder increase function are unsymmetrical along vertical and/or horizontal section in standard wearing conditions.

At least one of the optical element, has an optical function of not focusing an image on the retina of the eye of the person when the lens element is worn in standard wearing conditions.

Advantageously, such optical function of the optical element combined with a refractive area having at least one refractive power different from the refractive power of the prescription allows slowing down the progression of the abnormal refraction of the eye of the person wearing the lens element.

The optical elements may be non-contiguous optical elements.

In the sense of the invention two optical elements are non-contiguous if for all the paths linking the two optical elements one may measure at least along part of each path the refractive power based on a prescription for the eye of the person.

When the two optical elements are on a spherical surface, the two optical elements are non-contiguous if there for all the paths linking the two optical elements one may measure at least along part of each path the curvature of said spherical surface.

According to an embodiment of the invention, at least one of the optical elements has an optical function of focusing an image on a position other than the retina.

Preferably, at least 50%, for example at least 80%, for example all, of the optical elements have an optical function of focusing an image on a position other than the retina.

According to an embodiment of the invention, at least one of the optical elements has a non-spherical optical function.

Preferably at least 50%, for example at least 80%, for example all, of the optical elements have a non-spherical optical function.

In the sense of the invention, a "non-spherical optical function" is to be understood as not having a single focus point.

The at least one element having a non-spherical optical function is transparent.

One can add these optical elements on a defined array like square or hexagonal or random or other.

The optical element may cover specific zones of the lens element, like at the center or any other area.

The optical element density or the quantity of power may be adjusted depending on zones of the lens element. Typically, the optical element may be positioned in the periphery of the lens element, in order to increase the effect of the optical element on myopia control, so as to compensate peripheral defocus due to the peripheral shape of the retina for example.

According to an embodiment of the invention, at least one, for example all, of the optical elements has a shape configured so as to create a caustic in front of the retina of the eye of the person. In other words, such optical element is configured so that every section plane where the light flux is concentrated if any, is located in front of the retina of the eye of the person.

According to an embodiment of the invention, the at least one, for example all, of the optical element having a non-spherical optical function is a multifocal refractive micro-lens.

In the sense of the invention, an optical element is "multifocal refractive micro-lens" includes bifocals (with two focal powers), trifocals (with three focal powers), progressive addition lenses, with continuously varying focal power, for example aspherical progressive surface lenses.

According to an embodiment of the invention, the at least one multifocal refractive micro-lens has a toric surface. A toric surface is a surface of revolution that can be created by rotating a circle or arc about an axis of revolution (eventually positioned at infinity) that does not pass through its center of curvature.

Toric surface lenses have two different radial profiles at right angles to each other, therefore producing two different focal powers.

Toric and spheric surface components of toric lenses produce an astigmatic light beam, as opposed to a single point focus.

According to an embodiment of the invention, the at least one of the optical element having a non-spherical optical function, for example all, of the optical elements is a toric refractive micro-lens. For example, a toric refractive micro-lens with a sphere power value greater than or equal to 0 diopter ($\delta$) and smaller than or equal to +5 diopters ($\delta$), and cylinder power value greater than or equal to 0.25 Diopter ($\delta$).

As a specific embodiment, the toric refractive microlens may be a pure cylinder, meaning that minimum meridian line power is zero, while maximum meridian line power is strictly positive, for instance less than 5 Diopters.

According to an embodiment of the invention, at least one, for example all of the optical element, has discontinuities, such as a discontinuous surface, for example Fresnel surfaces and/or having a refractive index profile with discontinuities.

At least one, for example all, of the diffractive lenses may comprise a metasurface structure as disclosed in WO2017/176921.

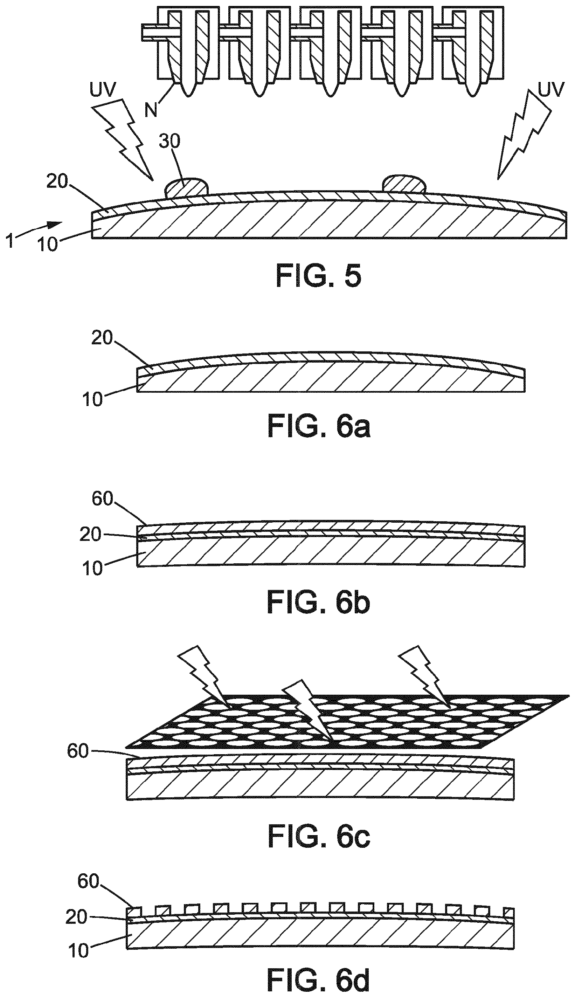

The diffractive lens may be a Fresnel lens whose phase function $\psi(r)$ has $\pi$ phase jumps at the nominal wavelength. One may give these structures the name "$\pi$-Fresnel lenses" for clarity's sake, as opposition to unifocal Fresnel lenses whose phase jumps are multiple values of $2\pi$. The $\pi$-Fresnel lens whose phase function is displayed in Figure 5 diffracts light mainly in two diffraction orders associated to dioptric powers 0 $\delta$ and a positive one P, for example 3 $\delta$.

According to an embodiment of the invention, at least one, for example all of the optical element, is a multifocal binary component.

According to an embodiment of the invention, at least one, for example all of the optical element, is a pixelated lens. An example of multifocal pixelated lens is disclosed in Eyal Ben-Eliezer et al, APPLIED OPTICS, Vol. 44, No. 14, 10 May 2005.

According to an embodiment of the invention, at least one, for example all of the optical elements, has an optical function with high order optical aberrations. For example, the optical element is a micro-lens composed of continuous surfaces defined by Zernike polynomials.

According to other embodiments, the optical elements do not induce a local change in optical power of the optical device but provide other optical functions.

For instance, an optical element can be a technical marking formed as a bump for on the top of bottom of the optical article comprising a progressive base lens 12, said technical marking enabling an optician to distinguish between the top and bottom of the optical article and hence to position properly the optical article in a frame.

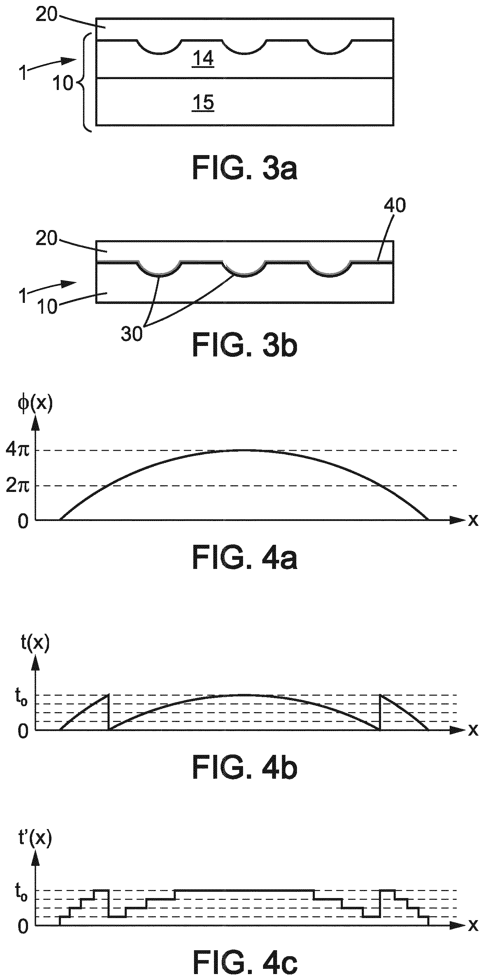

According to still another example shown schematically in figure 4c, the optical elements can be used to provide a global phase profile made of a multiple, yet finite number of constant phase optical element. Each microelement in that case presents a discrete profile having a constant thickness - the thickness being measured as the distance between the surface of the abrasion resistant coating 20 from which the optical element protrudes and the opposite surface of the optical element - for inducing a phase change in the optical element.

As shown in figure 4a, which does not fall under the scope of the claims, a desired phase $\varphi(x)$ profile is shown. This phase profile can be achieved either by a continuous diffractive $t(x,y)$ profile in figure 4b, or by providing a discretization of the phase profile as shown in figure 4c, obtained using multiple elements having constant thickness $t'(x, y)$, figures 4b and 4c not falling under the scope of the claims. The optical elements can be superimposed to provide the desired profile.

Each of concave and convex microlens/microelement can have a maximum height, e.g., measured in a direction perpendicular to first film surface 46a or second film surface that is less than or equal to 0.1 millimeters (mm), such as, for example, less than or equal to or between any two of 100 micrometers ($\mu$m), 90 $\mu$m, 80 $\mu$m, 70 $\mu$m, 60 $\mu$m, 50 $\mu$m, 40 $\mu$m, 30 $\mu$m, 20 $\mu$m, 10 $\mu$m, 5 $\mu$m, 1 $\mu$m, or smaller. Each of concave and convex microelement/microlenses can have a diameter, respectively, that is less than or equal to 2.0 mm, such as, for example, less than or equal to or between any two of 2.0 mm, 1.5 mm, 1.0 mm, 0.5 mm, 0.1 mm, 80 $\mu$m, 60 $\mu$m, 40 $\mu$m, 20 $\mu$m, or smaller.

With reference to figure 2a, according to a first embodiment, the optical elements may be formed on the surface of the abrasion resistant coating 20 opposite the surface which is at the interface with the base lens substrate 10. For instance, according to the previous example in which the abrasion resistant coating 20 is formed at the front surface of the base lens substrate, the optical elements 30 may protrude from the front surface 21 of the coating 20, which also forms the front surface of the optical article 1.

As the optical elements protrude from the abrasion resistant coating 20, there is only one diffraction of the ray of lights incoming on the optical elements, which is the diffraction caused by the different refraction indices of air and of the material forming the abrasion resistant coating 20. When the optical elements provide an optical power, this diffraction is well controlled and the design of the microelements can be easily adapted accordingly to achieve the desired optical power.

With reference to figure 2b, according to a second embodiment, the optical elements 30 are formed on the surface of the abrasion resistant coating 20 at the interface with the base lens substrate 10. The optical elements thus protrude towards the base lens substrate 10. In this embodiment, the base lens substrate 10 preferably comprises at least one recess 13 at the surface which is at the interface with the abrasion resistant coating, the recess 13 having a shape complementary to that of an optical element, to enable the optical element to be received in a complementary recess of the substrate.

In this embodiment, the optical elements 30 are fully encapsulated within the optical article 1, which provides the advantage that the outer surfaces of the optical article are devoid of any bumps or local changes of curvature relative to the overall curvature of the outer surfaces, which is more aesthetic, more comfortable and makes it easier to provide any desired additional coating on the outer surfaces of the optical article 1.

In this embodiment, an optical diopter is created by the difference of refraction indices between the material of the base lens substrate 10 at the interface, and the material forming the optical elements 30. As this difference of index is lower than the difference between the optical element material and air (case of the previous embodiment), if the optical elements are microlenses, this difference needs to be compensated by increasing the curves of the microlenses to increase their surfacic power. This can be easily calculated knowing the bases and indexes of materials. Thus in this embodiment as well the optical power of microlenses can be well controlled. If the abrasion-resistant coating is formed as a bi-layered structure as disclosed above, the optical elements could be constituted in the material of the upper harder layer of the bi-layered structure and be made integral with the latter, either on the interface with the lower less hard layer that would be provided with complementary recesses, or on the opposite surface of the upper harder layer of the bi-layered structure. Alternatively, the optical elements could be constituted in the material of the lower less hard layer, and protrude toward the main surface of the base lens substrate.

If the optical elements form a Fresnel structure, which does not fall under the scope of the claims, the optical power of the Fresnel structure can be well controlled for the same reasons in the two embodiments disclosed above. The Fresnel microstructure thus obtained can be similar to one of those disclosed in the document EP 2 287 385 or WO2014060552 that defines phase shifting microelements typical of a Fresnel microstructure.

One can notice that the layer formed by the abrasion-resistant coating 20 wearing the optical elements 30 (be they formed of the same abrasion-resistant material as the coating or a distinct one) exhibits two kinds of outer surfaces: a first one constituted by the outer surfaces of the microelements, comprises local curvature variations due to the shape of the optical elements, whereas the second one constituted by the surfaces of the abrasion-resistant coating 20 disposed between the optical elements exhibits fewer or even no local curvature variations. Preferably, the difference induced by a local curvature variation of a microelement compared to the surrounding second kind of surface is at least 1 D.

Such a layer therefore exhibits a thickness in average greater at the optical element than away from them, and the maximum thickness of the layer is reached at the point of maximum thickness of the optical elements.

Back to the embodiment in which the optical elements 30 protrude from a surface of the abrasion-resistant coating 20 at the interface with the base lens substrate 10, in the case where the optical elements induce a local change of optical power of the optical device (microlenses, Fresnel structure), the indices of refraction of the microelements nM and of the layer 10i of the base lens substrate 10 at the interface with the microelements nS are distinct in order to allow said local change of optical power.

According to a first embodiment, the index $n_S$ of the substrate at the interface with the microelements can be lower than the index $n_M$ of the microelements, or it can be slightly superior but not beyond a given threshold T:

$$n_s - n_M < T$$

T is for instance about 0.1

In this case, as shown in figure 3a, the base lens substrate may comprise a first layer 14 of low index of refraction $n_S$ at the interface with the microelements, and comprise an additional layer 15 of higher index of refraction $n_{HI}$ than $n_S$. This case is particularly suitable when the layers 14 and 15 are part of an optical lens inducing a high optical power, because a low index material may not be sufficient to provide high correction within a low thickness, and the high index layer 15 may provide the desired optical power while maintaining a low thickness.

According to another embodiment shown in figure B, the index nS of the substrate at the interface with the microelements is greater than the index nM of the microelements beyond the above threshold:

$$n_s - n_M \geq T$$

In that case the difference in refraction index between the base lens substrate 10 and the optical elements 30 may induce reflections at the interface. The optical article 1 then preferably comprises a quarter-wave layer 40 at the interface between the base lens substrate 10 and the optical elements 30, suitable for reducing the amount of reflections. A quarter wave layer (also noted as λ/4 layer) having a refraction index RI = $(n_S.n_M)^{1/2}$ may for instance be used.

A detailed example of λ/4 layer is disclosed in patent US7008690 of the applicant.

Last the optical article 1 can comprise one or more coating(s) on each of the front surface and back surface thereof. For instance, the front surface of the optical article 1 may be coated with an anti-reflection coating 50 (shown in dotted line in figure 2b).

_Manufacturing method of an optical article_

The optical article 1 described above, which incorporates optical elements 30 in a material suitable for forming an abrasion resistant coating, may be produced according to a number of various manufacturing methods.

First of all, the optical elements may be formed on the base-lens substrate 10 during the manufacturing of the optical elements. However, optical elements may also be formed on a layer of abrasion resistant material of a finished optical article, in the embodiment where the optical elements protrude from an outer surface of the abrasion resistant layer.

With reference to figure 5, if the optical article 1 is designed according to the embodiment in which the optical elements 30 protrude from an outer surface of the article 1 formed by a surface of the abrasion resistant coating 20, the microelements can be formed by additive manufacturing, and in particular by inkjet.

According to this embodiment, an even abrasion resistant coating 20 is first formed an a surface of the base-lens substrate 10 by spin coating, dipping, or spraying or inkjet or by additive manufacturing, followed by curing/polymerization.

Then, optical elements are formed according to a desired patterned on the abrasion-resistant coating by technique such as inkjet or spraying as disclosed in the document WO2018010809A1. To this end, an installation comprises a plurality of nozzles N which are fed with a material suitable for forming the optical elements. The mesh size of the nozzles can be determined in accordance with the density, viscosity and surface tension of the material used for the inkjet printing. The positioning of the nozzles relative to the abrasion resistant coating 20 is programmed.

In order to obtain good adhesion between the optical elements and the abrasion resistant coating, different techniques can be used such as surface treatments (physical: corona or plasma treatment for example or chemical with appropriate adhesion promoters according to the material forming the optical elements and the abrasion resistant coating).

The nozzles deposit droplets of material at the desired positions and between each deposition a UV flash light or a thermic flash light may be used to start the polymerization in order to fix the droplets shape and position until the next deposition. Additive can also be added in the material for forming the optical elements, such as colors or filters.

Compositions of materials suitable for forming abrasion resistant coating and which can be used in inkjet printing may be found in document US2007238804.

According to another manufacturing method embodiment shown in figures 6a to 6d, the optical elements may be formed by photolithography.

During a first step (figure 6a), an abrasion resistant coating 20 is formed on a surface of the base lens substrate 10 by spin coating, dipping, spraying, inkjet or additive manufacturing followed by curing. A layer 60 of photopolymerisable abrasion resistant coating is then deposited (figure 6b) on the exposed surface of the first layer of abrasion resistant coating 20, by dipping or spin coating followed by curing. A mask (figure 6c) is positioned on top of the layer 60, having holes thereof in the shape of the optical elements to be formed. The exposed parts of the layer 60 are then photopolymerized and cured to form the optical elements, whereas the other parts can be washed away, revealing the abrasion resistant coating 20 below (figure 6d).

Regarding any of the two previous embodiments of the manufacturing method, if the optical elements are added to the abrasion resistant layer of a finished optical article, the addition of the optical elements can require a surface treatment of the abrasion resistant layer to allow adhesion between the deposited optical elements and the abrasion resistant layer.

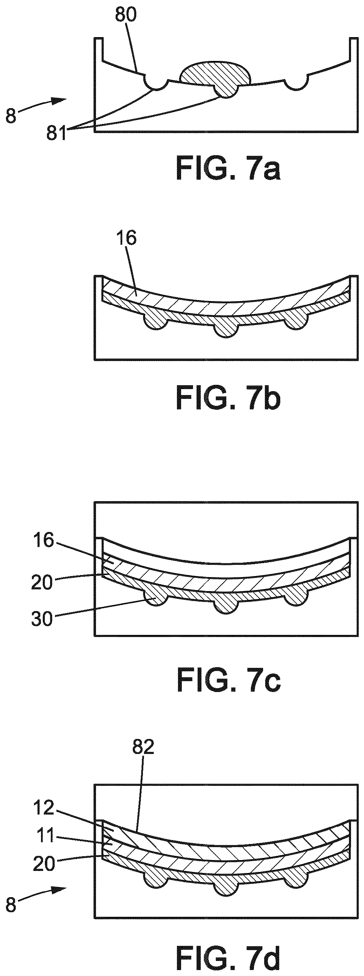

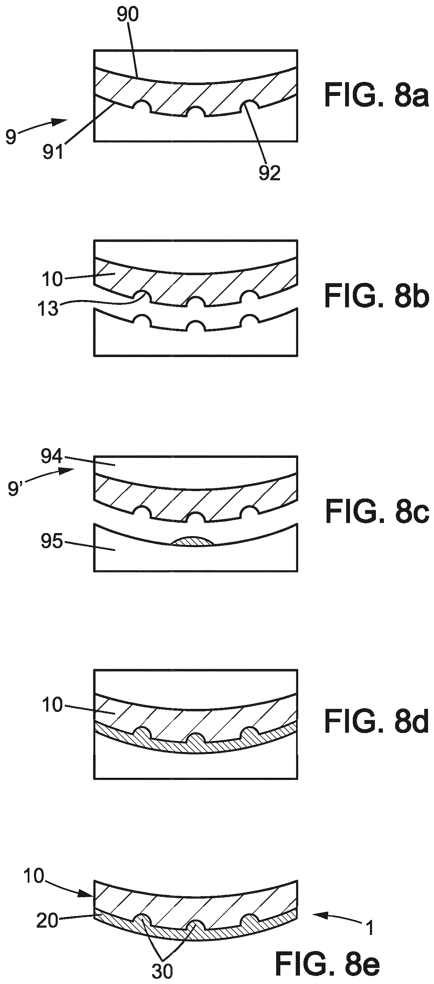

With reference to figures 7a to 7d and 8a to 8e, the optical article may also be molded. In that case, the optical elements and the abrasion resistant coating are preferably formed simultaneously, by molding of the same material.

According to a first embodiment shown in figures 7a to 7d, the manufacturing method by molding allows forming an optical article in which the optical elements protrude from an outer surface thereof, like in figure 2a described above.

According to this method, a mold 8 is provided (figure 7a) having a first surface 80 in which at least one recess 81 is formed, the recess having a shape complementary to that of a respective optical element to be formed.

Material suitable for forming abrasion resistant material is deposited in a malleable state on the surface 80. A support layer 16 is then inserted in the mold and applied on the material in order for the material to spread between the surface 80 and the support layer, the material thus filing the recesses formed in the surface 80 (figure 7b). By "malleable state" it is meant a state enabling the spreading of the material to fill in the recesses.

In an embodiment, the support layer 16 may be an optical lens previously formed. In another embodiment, the support layer may be a wafer such as the one described above. In another embodiment, the support layer may be the base lens substrate.

The material filling the recesses 81 is then cured (figure 4c) to harden an abrasion resistant coating 20 on the support layer, the coating thereby carrying the optical elements 30 formed in the recesses 81.

In case where the support layer is the base lens substrate, the optical article 1 is obtained once the mold is removed.

According to another embodiment, the support layer may be for instance a wafer 11, and the method may further comprise (figure 4d) a step of providing another mold surface 82 defining, with a surrounding gasket (not shown), a cavity extending between the free surface of the wafer and the other mold surface 82, filling said cavity with malleable material suitable to form an optical lens, and curing said material.

Upon removal of the mold, the obtained optical article 1 then comprises the base lens substrate 10 comprising the wafer 11 having an abrasion resistant coating in which are formed the optical elements 30, and the optical lens 12 on the opposite side of the wafer.

According to another embodiment shown in figures 8a to 8e, the manufacturing method by molding allows forming an optical article in which the optical elements 30 are encapsulated within the optical article 1.

According to a first step shown in figure 8a, the base-lens substrate 10 or at least a layer of the base lens substrate 10 which is designed to comprise the recesses 13 complementary to the optical elements is formed by molding. To this end, a mold 9 is provided having two walls 90, 91 of given respective curvatures chosen with respect to the respective front and back surface of the layer of the base lens substrate 10 to be formed, one of the walls having one protruding element 92 of the shape respectively of each optical element to be made. The layer of the base lens substrate 10 is molded in that mold to achieve the desired recesses 13 (fig. 8b).

Then the layer of the base lens substrate is put inside another mold 9' having two surfaces 94, 95 of the same respective curvatures as the walls 90, 91 of the previous mold, but the two surfaces being devoid of any protruding element. Material suitable for forming abrasion resistant coating is provided in a malleable state between the surface of the layer of base lens substrate comprising the recesses 13 and the opposite surface 95 of the mold (fig. 8c). The closing of the mold then exerts a pressure on the material that makes it spread over the surface of the layer of base lens substrate and fill in the recesses of the surface (fig. 8d).

The material is then cured and the mold is removed to obtain an optical article 1 comprising the layer of base lens substrate 10 having an abrasion resistant coating 20 and optical elements 30 formed integral with the abrasion resistant coating and encapsulated within the article.

Once the optical article comprising the base lens substrate and the abrasion resistant coating with protruding optical elements is obtained, it may further be coated on any one or both opposite main surfaces with an additional coating such as an anti-reflective coating.

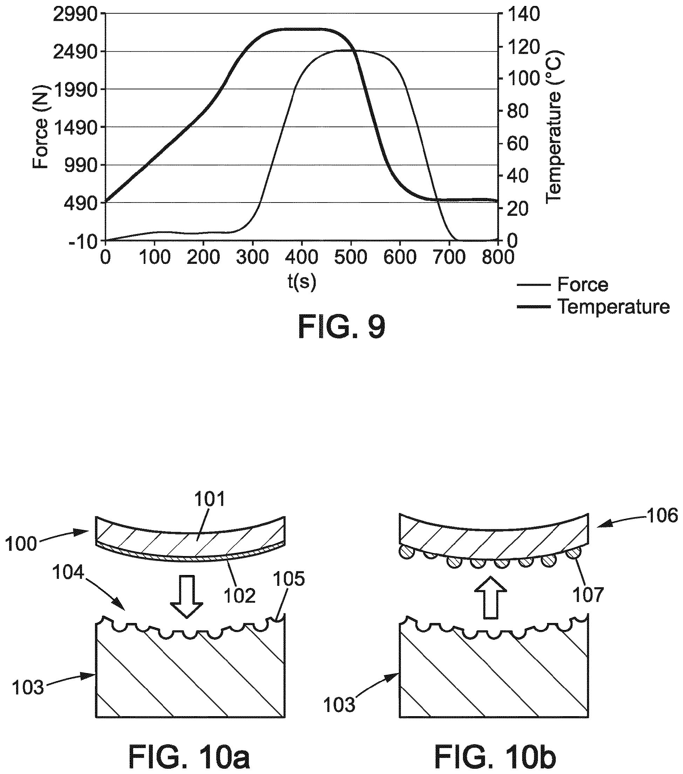

With reference to figures 9 to 13, the optical article may also be obtained thanks to a thermal embossing technology on coated substrate. In that case, an optical article in which the optical elements protrude from an outer surface thereof, like in figure 2a or 7a to 7d is obtained.

According to this method, as illustrated on the figure 10a, a substrate 101 is provided with an abrasion resistant coating 102 applied on one surface, for exemple by dip coating like traditional lenses are, and UV or thermally cured.

The resulting varnished substrate is then embossed with a thermal embossing technology involving pressure and temperature. An embossing mold comprising an insert 103 whose internal surface 104 is provided with at least one recess 105 is made facing the layer of abrasion resistant coating 102 of the substrate 101. The varnished substrate is applied by its abrasion resistant coating on the internal surface 104 of the insert. The mold is closed and a predetermined temperature and pressure are applied during a time allowing at least the abrasion resistant coating or even in some case also a part of the substrate to take the form of the recess of the mold 103.

The temperature, pressure and time will be chosen at least in function of the abrasion resistant coating thermal properties and/or thickness to allow at least the abrasion resistant coating or even in some case also a part of the substrate, to take the form of the recess of the mold 103. Ideally, the thermal properties of the substrate will also be taken into account. For example, an abrasion resistant coating and the corresponding substrate can be chosen so as to have similar thermal properties i.e. similar glass transition temperature or equivalent. Or, if the abrasion resistant coating and the corresponding substrate have different thermal properties i.e. glass transition temperature or equivalent separated from more than 10°C, preferably 20°C or even more preferably 30°C, the thickness of the abrasion resistant coating, the form of the recess and/or the pressure, time and temperature of the embossing method will be adapted in order to allow at least the abrasion resistant coating or even in some case also a part of the substrate.

Preferably the kind of abrasion resistant coating and/or its thickness, will be chosen in function of the thermal properties of the substrate to allow at least the abrasion resistant coating or even in some case also a part of the substrate, to take the form of the recess of the mold 103.

Even if the substrate and the abrasion resistant coating are not of the thermoplastic kind, the experiments provided showed that they can be heated to allow at least the abrasion resistant coating or even in some case also a part of the substrate to take the recess form of the mold 103.

Specifically for the illustrated example, a substrate MR8 was coated with a 3-6 $\mu$m thickness of a Mithril HI abrasion resistant coating, and, according to the figure 9, heated around 120°C (temperature close to the glass transition temperatures of both Mithril HI and MR8 substrate) and with an embossing force applied during a predetermined time (for example as disclosed in the figure 9, between 2500 and 3000 N during 200 s).

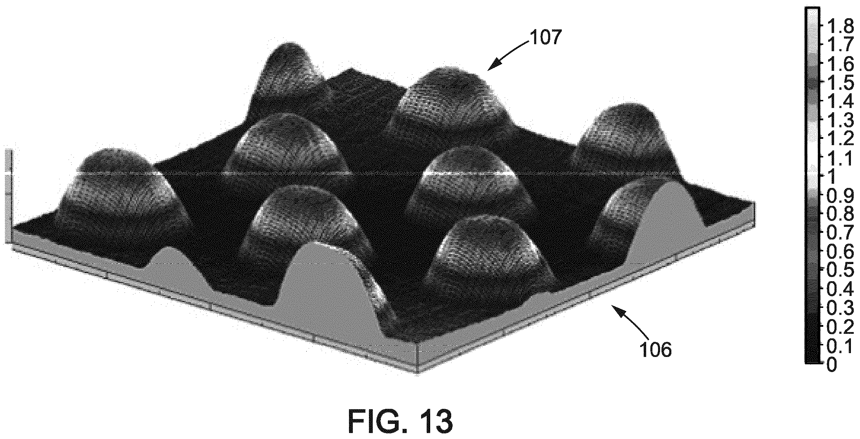

After cooling the resulting embossed varnished substrate 106, a lens on the surface of which an optical element made from abrasion resistant coating 107 and of a form complementary to the recess 105 is obtained (see figure 13).

The substrate ideally has to present the same radius as the insert.

Said substrate can be constituted by a semifinished lens i.e. a lens whose at least one surface (the one opposite to the abrasion resistant coating) will have to be processed at a predetermined form to define a particular optical design, or by a finished lens. The substrate can also be constituted by a functional wafer or film, that will be varnished with an abrasion resistant coating, and then embossed to form the optical elements according to the present embodiment of the invention.

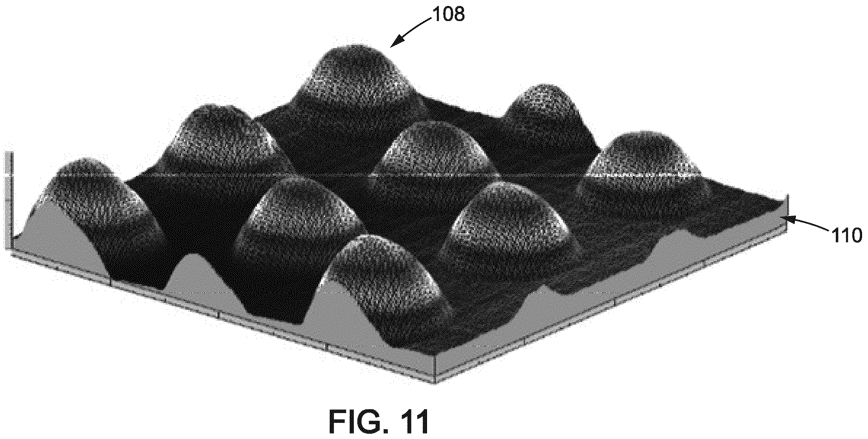

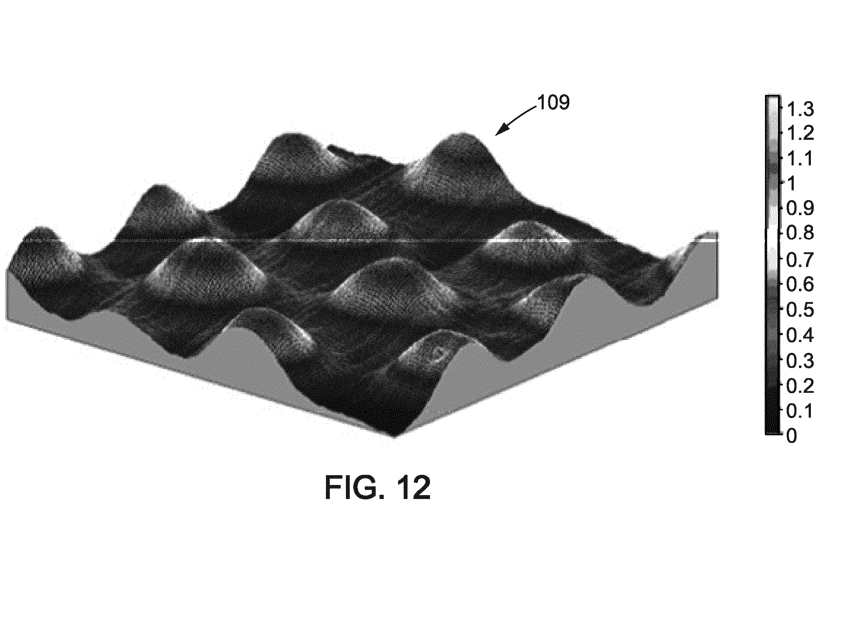

The figures 11 to 13 show the benefit of the thermal embossing of an already varnished substrate (MR8 substrate and Mithril HI varnish, figure 13) according to the present embodiment of the invention as depicted in the figure 9, wherein well defined (i.e. with a predetermined form and curvature) optical elements 107 are obtained, compared to the resulting poorly defined optical elements 109 of the optical article shown on the figure 12, obtained on the contrary, further the naked substrate 110 is firstly embossed and defines well defined optical elements 108 (MR8 substrate, figure 11) and then coated with an abrasion resistant coating (Mithril HI, figure 12) that reduces the curvature of the optical elements 108 constituted by the material of the substrate 110 by smoothening the surface.

According to yet another embodiment, not illustrated, optical elements constituted from abrasion resistant material, can be obtained by injection, by inserting an abrasion resistant film into a cavity of an injection mold comprising an inner surface provided with at least a recess having a shape complementary to the shape of an optical element to be formed, the abrasion resistant film being pushed along said inner surface to match the form of the recess when the melt polymer is injected into the mold cavity.

**Claims**

1. An optical article (1), comprising:

   - a base lens substrate (10), having a front surface (101) and a back surface (102),
   - an abrasion resistant coating (20) covering at least one of said front surface (101) and said back surface (102), the abrasion resistant coating (20) having a first surface (21, 22) at the interface with the base lens substrate and a second surface (22,21) opposite the first, and
   - a plurality of non-contiguous optical elements (30) each protruding from one of the first and second surfaces of said abrasion resistant coating, said optical elements being composed of a material adapted to form an abrasion resistant coating,

   wherein the layer formed by the abrasion-resistant coating (20) wearing the optical elements (30) exhibits two kinds of outer surfaces:

   - a first one constituted by the outer surfaces of the optical elements (30) comprising local curvature variations due to the shape of the optical elements,
   - a second one constituted by the surfaces of the abrasion-resistant coating (20) disposed between the optical elements and exhibiting fewer or no local curvature variation.

2. An optical article (1) according to claim 1, wherein the thickness of a layer composed of the abrasion resistant coating (20) and the optical elements (30) protruding thereof is maximal at an optical element.

3. An optical article (1) according to claim 1 or 2, wherein the abrasion resistant coating (20) is formed of the same material as the one of which are composed the optical elements (30).

4. An optical article (1) according to any of claims 1 to 3, wherein the optical elements (30) protrude from the second surface of the abrasion resistant coating (20).

5. An optical article (1) according to any of claims 1 to 4, wherein the optical elements (30) protrude from the first surface of the abrasion resistant coating (20) towards the base lens substrate (10), and the base lens substrate (10) comprises at least one recess (13) in the surface at the interface with the abrasion resistant coating (20), said recess (13) having a shape complementary to the shape of the optical elements (30) so that each optical element is received in a respective recess (13).

6. An optical article (1) according to claim 5, wherein the optical elements (30) define a local change of optical power of the optical device, the material forming the optical elements (30) has an optical index $n_M$, and the base lens substrate (10) has at least one layer in which each recess is formed, said layer being made in a material having an optical index $n_S$ such that the optical index $n_M$ is different from the optical index $n_s$.

7. An optical article according to claim 6, wherein the layer (14) of the base substrate in which each recess is formed has an optical index $n_S$ $n_s < n_M$, and the base substrate further comprises a second layer (15) assembled to the first layer (14) on a surface opposite the surface on which is formed each recess (13), the second layer (15) having a refraction index $n_{HI}$ greater than the refraction index $n_S$ of the first layer.

8. An optical article (1) according to claim 6, wherein the optical index $n_S$ of the layer of the base lens substrate in which each recess is formed is such that $n_s - n_M \geq 0.1$, , and the optical article further comprises a quarter-wave layer (40) interposed between the abrasion resistant coating (20) and the base substrate (10).

9. An optical article (1) according to any of the preceding claims, wherein the optical elements are chosen among the following group:

   - microlens,
   - Diffractive structures such as microlenses defining each a Fresnel structure.

10. An optical article (1) according to any of the preceding claims, further comprising an anti-reflection coating over said second surface of the abrasion-resistant coating.

11. An optical article (1) according to any of the preceding claims, wherein the base lens substrate (10) comprises at least a plano wafer (11) or a base lens (12) having optical power.

12. A method for manufacturing an optical article (1), comprising:

   - providing a base lens substrate (10) having a front surface (101) and a back surface (102),
   - forming, on the front surface (101) or the back surface (102) of the base lens substrate (10), an abrasion resistant coating (20) having a first surface (21, 22) at an interface with the base lens substrate (10) and a second surface (22,21) opposite the first surface, and
   - forming a plurality of non-contiguous optical elements (30) protruding from one of the first and second surfaces of said abrasion-resistant coating (20), the optical elements (30) being composed of a material adapted to form an abrasion resistant coating,

   wherein the layer formed by the abrasion-resistant coating (20) wearing the optical elements (30) exhibits two kinds of outer surfaces:

   - a first one constituted by the outer surfaces of the optical elements (30) comprising local curvature variations due to the shape of the optical elements,
   - a second one constituted by the surfaces of the abrasion-resistant coating (20) disposed between the optical elements and exhibiting fewer or no local curvature variation.

13. A method according to claim 12, wherein the abrasion-resistant coating is formed on the front (101) or back surface (102) of the base lens substrate (10) by dipping or spin-coating or spraying or inkjet or additive manufacturing, and the step of forming the plurality of optical elements is made by additive manufacturing or by photolithography or by thermal embossing a base lens substrate covered by an abrasion resistant coating or by injection of a melt polymer into a mold cavity in which an abrasion resistant film is inserted, the melt polymer being injected on the abrasion resistant film pushing the later on the inner surface of an injection mold comprising at least a recess having a shape complementary to the shape of optical elements to be formed.

14. A method according to claim 12, wherein the abrasion-resistant coating (20) and the optical elements (30) are composed of a same material and formed simultaneously by molding.

**Patentansprüche**

1. Optischer Gegenstand (1), umfassend:

   - ein Basislinsensubstrat (10), das eine Vorderseite (101) und eine Rückseite (102) aufweist; und
   - eine abriebfeste Beschichtung (20), welche mindestens eine der Vorderseite (101) und der Rückseite (102) bedeckt, wobei die abriebfeste Beschichtung (20) eine erste Oberfläche (21, 22) an der Grenzfläche mit dem Basislinsensubstrat und eine zweite Oberfläche (22, 21) gegenüber der ersten Oberfläche aufweist, und
   - eine Vielzahl von nicht-zusammenhängenden optischen Elementen (30), die jeweils aus einer der ersten und der zweiten Oberfläche der abriebfesten Beschichtung herausragen, wobei die optischen Elemente aus einem Material bestehen, das geeignet ist, eine abriebfeste Beschichtung zu bilden,
   wobei die Schicht, die durch die abriebfeste Beschichtung (20) gebildet wird und welche die optischen Elemente (30) trägt, zwei Arten von Außenflächen aufweist:

   - eine Erste, die durch die Außenflächen der optischen Elemente (30) gebildet wird, die lokale Krümmungsvariationen aufgrund der Form der optischen Elemente umfassen,
   - eine Zweite, die durch die Oberflächen der abriebfesten Beschichtung (20) gebildet wird, die zwischen den optischen Elementen angeordnet ist, und die weniger oder keine lokale Krümmungsänderung aufweist.

2. Optischer Gegenstand (1) nach Anspruch 1, wobei die Dicke einer Schicht, die aus der abriebfesten Beschichtung (20) und den optischen Elementen (30) besteht, die aus dieser herausragen, an einem optischen Element maximal ist.

3. Optischer Gegenstand (1) nach Anspruch 1 oder 2, wobei die abriebfeste Beschichtung (20) aus dem gleichen Material wie dasjenige gebildet ist, aus dem die optischen Elemente (30) bestehen.

4. Optischer Gegenstand (1) nach einem der Ansprüche 1 bis 3, wobei die optischen Elemente (30) aus der zweiten Oberfläche der abriebfesten Beschichtung (20) herausragen.

5. Optischer Gegenstand (1) nach einem der Ansprüche 1 bis 4, wobei die optischen Elemente (30) aus der ersten Oberfläche der abriebfesten Beschichtung (20) in Richtung auf das Basislinsensubstrat (10) herausragen, und wobei das Basislinsensubstrat (10) mindestens eine Vertiefung (13) in der Oberfläche an der Grenzfläche mit der abriebfesten Beschichtung (20) umfasst, wobei die Vertiefung (13) eine Form aufweist, die komplementär zu der Form der optischen Elemente (30) ist, sodass jedes optische Element in einer jeweiligen Vertiefung (13) aufgenommen wird.

6. Optischer Gegenstand (1) nach Anspruch 5, wobei die optischen Elemente (30) eine lokale Änderung der Brechkraft der optischen Vorrichtung definieren, wobei das Material, das die optischen Elemente (30) bildet, einen Brechungsindex $n_M$ aufweist, und wobei das Basislinsensubstrat (10) mindestens eine Schicht aufweist, in der alle Vertiefungen gebildet sind, wobei die Schicht aus einem Material mit einem Brechungsindex $n_S$ gefertigt ist, sodass der Brechungsindex $n_M$ verschieden ist von dem Brechungsindex $n_S$.

7. Optischer Gegenstand nach Anspruch 6, wobei die Schicht (14) des Basissubstrats, in dem alle Vertiefungen gebildet sind, einen Brechungsindex $n_S$ mit $n_S < n_M$ aufweist, und wobei das Basissubstrat ferner eine zweite Schicht (15) umfasst, die auf einer Oberfläche gegenüber der Oberfläche, in der alle Vertiefungen (13) gebildet sind, an die erste Schicht (14) angefügt ist, wobei die zweite Schicht (15) einen Brechungsindex $n_{HI}$ aufweist, der größer als der Brechungsindex $n_S$ der ersten Schicht ist.

8. Optischer Gegenstand (1) nach Anspruch 6, wobei der Brechungsindex $n_S$ der Schicht des Basislinsensubstrats, in der alle Vertiefungen gebildet sind, derart ist, dass $n_S - n_M \geq 0,1$ ist, und wobei der optische Gegenstand ferner eine Viertelwellenschicht (40) umfasst, die zwischen der abriebfesten Beschichtung (20) und dem Basissubstrat (10) angeordnet ist.

9. Optischer Gegenstand (1) nach einem der vorhergehenden Ansprüche, wobei die optischen Elemente aus der folgenden Gruppe ausgewählt werden:

    - einer Mikrolinse,
    - diffraktiven Strukturen, wie zum Beispiel Mikrolinsen, die jeweils eine Fresnel-Struktur definieren.

10. Optischer Gegenstand (1) nach einem der vorhergehenden Ansprüche, der ferner eine Antireflexionsbeschichtung über der zweiten Oberfläche der abriebfesten Beschichtung umfasst.

11. Optischer Gegenstand (1) nach einem der vorhergehenden Ansprüche, wobei das Basislinsensubstrat (10) mindestens einen Planowafer (11) oder eine Basislinse (12) umfasst, die eine Brechkraft aufweist.

12. Verfahren zum Herstellen eines optischen Gegenstands (1), umfassend:

    - Bereitstellen eines Basislinsensubstrats (10), das eine Vorderseite (101) und eine Rückseite (102) aufweist,
    - Bilden einer abriebfesten Beschichtung (20), die eine erste Oberfläche (21, 22) an einer Grenzfläche mit dem Basislinsensubstrat (10) und eine zweite Oberfläche (22, 21) gegenüber der ersten Oberfläche aufweist, auf der Vorderseite (101) oder der Rückseite (102) des Basislinsensubstrats (10), und
    - Bilden einer Vielzahl von nicht-zusammenhängenden optischen Elementen (30), die aus einer der ersten und der zweiten Oberfläche der abriebfesten Beschichtung (20) herausragen, wobei die optischen Elemente (30) aus einem Material bestehen, das geeignet ist, eine abriebfeste Beschichtung zu bilden,
    wobei die Schicht, die durch die abriebfeste Beschichtung (20) gebildet wird und welche die optischen Elemente (30) trägt, zwei Arten von Außenflächen aufweist:

        - eine Erste, die durch die Außenflächen der optischen Elemente (30) gebildet wird, die lokale Krümmungsvariationen aufgrund der Form der optischen Elemente umfassen,
        - eine Zweite, die durch die Oberflächen der abriebfesten Beschichtung (20) gebildet wird, die zwischen den optischen Elementen angeordnet ist, und die weniger oder keine lokale Krümmungsänderung aufweist.

13. Verfahren nach Anspruch 12, wobei die abriebfeste Beschichtung auf der Vorderseite (101) oder der Rückseite (102) des Basislinsensubstrats (10) durch ein Eintauchen oder eine Rotationsbeschichtung oder ein Besprühen oder einen Tintenstrahl oder eine generative Herstellung gebildet wird, und wobei der Schritt des Bildens der Vielzahl von optischen Elementen durch eine generative Herstellung oder durch eine Fotolithographie oder durch ein thermisches Prägen eines Basislinsensubstrats, das mit einer abriebfesten Beschichtung bedeckt ist, oder durch Einspritzen eines geschmolzenen Polymers in einen Formhohlraum erfolgt, in den eine abriebfeste Folie eingefügt wird, wobei das geschmolzene Polymer, das auf die abriebfeste Folie gespritzt wird, Letztere auf die Innenfläche einer Spritzgussform schiebt, die mindestens eine Vertiefung umfasst, die eine Form aufweist, die komplementär zu der Form von zu bildenden optischen Elementen ist.

14. Verfahren nach Anspruch 12, wobei die abriebfeste Beschichtung (20) und die optischen Elemente (30) aus einem gleichen Material bestehen und gleichzeitig durch ein Spritzgießen gebildet werden.

## Revendications

1. Article optique (1), comprenant :

   - un substrat de lentille de base (10), ayant une surface avant (101) et une surface arrière (102),
   - un revêtement résistant à l'abrasion (20) recouvrant ladite surface avant (101) et/ou ladite surface arrière (102), le revêtement résistant à l'abrasion (20) ayant une première surface (21, 22) à l'interface avec le substrat de lentille de base et une deuxième surface (22, 21) à l'opposé à la première, et
   - une pluralité d'éléments optiques non contigus (30), chacun dépassant d'une des première et deuxième surfaces dudit revêtement résistant à l'abrasion, lesdits éléments optiques étant composés d'un matériau adapté pour former un revêtement résistant à l'abrasion,
   dans lequel la couche formée par le revêtement résistant à l'abrasion (20) portant les éléments optiques (30) présente deux types de surfaces externes :

      - un premier constitué par les surfaces externes des éléments optiques (30) comportant des variations locales de courbure dues à la forme des éléments optiques,
      - un deuxième constitué par les surfaces du revêtement résistant à l'abrasion (20) disposées entre les éléments optiques et présentant moins de variations locales de courbure ou aucune.

2. Article optique (1) selon la revendication 1, dans lequel l'épaisseur d'une couche composée du revêtement résistant à l'abrasion (20) et des éléments optiques (30) dépassant de celui-ci est maximale au niveau d'un élément optique.

3. Article optique (1) selon la revendication 1 ou 2, dans lequel le revêtement résistant à l'abrasion (20) est constitué du même matériau que celui dont sont composés les éléments optiques (30).

4. Article optique (1) selon l'une quelconque des revendications 1 à 3, dans lequel les éléments optiques (30) dépassent de la deuxième surface du revêtement résistant à l'abrasion (20).

5. Article optique (1) selon l'une quelconque des revendications 1 à 4, dans lequel les éléments optiques (30) dépassent de la première surface du revêtement résistant à l'abrasion (20) en direction du substrat de lentille de base (10), et le substrat de lentille de base (10) comprend au moins une encoche (13) dans la surface à l'interface avec le revêtement résistant à l'abrasion (20), ladite encoche (13) ayant une forme complémentaire de la forme des éléments optiques (30), de sorte que chaque élément optique est reçu dans une encoche respective (13).

6. Article optique (1) selon la revendication 5, dans lequel les éléments optiques (30) définissent un changement local de puissance optique du dispositif optique, le matériau formant les éléments optiques (30) a un indice optique $n_M$, et le substrat de lentille de base (10) comporte au moins une couche dans laquelle chaque encoche est formée, ladite couche étant élaborée dans un matériau ayant un indice optique $n_S$ tel que l'indice optique $n_M$ est différent de l'indice optique $n_S$.

7. Article optique selon la revendication 6, dans lequel la couche (14) du substrat de base dans laquelle chaque encoche est formée a un indice optique $n_S$ tel que $n_S < n_M$, et le substrat de base comprend en outre une deuxième couche (15) assemblée à la première couche (14) sur une surface à l'opposé de la surface sur laquelle est formée chaque encoche (13), la deuxième couche (15) ayant un indice de réfraction $n_{HI}$ supérieur à l'indice de réfraction $n_S$ de la première couche.

8. Article optique (1) selon la revendication 6, dans lequel l'indice optique $n_S$ de la couche du substrat de lentille de base dans laquelle chaque encoche est formée est tel que $n_S - n_M \geq 0,1$, et l'article optique comprend en outre une couche quart d'onde (40) intercalée entre le revêtement résistant à l'abrasion (20) et le substrat de base (10).

9. Article optique (1) selon l'une quelconque des revendications précédentes, dans lequel les éléments optiques sont choisis dans le groupe suivant :

   - une microlentille,

- des structures diffractives telles que des microlentilles définissant chacune une structure de Fresnel.

10. Article optique (1) selon l'une quelconque des revendications précédentes, comprenant en outre un revêtement antireflet sur ladite deuxième surface du revêtement résistant à l'abrasion.

11. Article optique (1) selon l'une quelconque des revendications précédentes, dans lequel le substrat de lentille de base (10) comprend au moins une plaque plane (11) ou une lentille de base (12) ayant une puissance optique.

12. Procédé destiné à fabriquer un article optique (1), comprenant :

- l'obtention d'un substrat de lentille de base (10) ayant une surface avant (101) et une surface arrière (102),
- la formation, sur la surface avant (101) ou la surface arrière (102) du substrat de lentille de base (10), d'un revêtement résistant à l'abrasion (20) ayant une première surface (21, 22) à une interface avec le substrat de lentille de base (10) et une deuxième surface (22, 21) à l'opposé de la première surface, et
- la formation d'une pluralité d'éléments optiques non contigus (30) dépassant d'une des première et deuxième surfaces dudit revêtement résistant à l'abrasion (20), les éléments optiques (30) étant composés d'un matériau adapté pour former un revêtement résistant à l'abrasion, dans lequel la couche formée par le revêtement résistant à l'abrasion (20) portant les éléments optiques (30) présente deux types de surfaces externes :
- un premier constitué par les surfaces externes des éléments optiques (30) comportant des variations locales de courbure dues à la forme des éléments optiques,
- un deuxième constitué par les surfaces du revêtement résistant à l'abrasion (20) disposées entre les éléments optiques et présentant moins de variations locales de courbure ou aucune.

13. Procédé selon la revendication 12, dans lequel le revêtement résistant à l'abrasion est formé sur la surface avant (101) ou arrière (102) du substrat de lentille de base (10) par immersion ou dépôt à la tournette ou pulvérisation ou jet d'encre ou fabrication additive, et l'étape de formation de la pluralité d'éléments optiques est réalisée par fabrication additive ou par photolithographie ou par gaufrage thermique d'un substrat de lentille de base recouvert d'un revêtement résistant à l'abrasion ou par injection d'un polymère fondu dans une cavité de moule dans laquelle un film résistant à l'abrasion est inséré, le polymère fondu étant injecté sur le film résistant à l'abrasion, poussant ce dernier sur la surface interne d'un moule d'injection comprenant au moins une encoche ayant une forme complémentaire de la forme des éléments optiques à former.

14. Procédé selon la revendication 12, dans lequel le revêtement résistant à l'abrasion (20) et les éléments optiques (30) sont composés d'un même matériau et formés simultanément par moulage.

FIG. 1a

FIG. 1b

FIG. 2a

FIG. 2b

FIG. 3a

FIG. 3b

FIG. 4a

FIG. 4b

FIG. 4c

FIG. 5

FIG. 6a

FIG. 6b

FIG. 6c

FIG. 6d

FIG. 7a

FIG. 7b

FIG. 7c

FIG. 7d

FIG. 8a

FIG. 8b

FIG. 8c

FIG. 8d

FIG. 8e

FIG. 9

FIG. 10a

FIG. 10b

FIG. 11

FIG. 12

FIG. 13

EP 3 867 672 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170131567 A
- WO 2016168746 A
- EP 2878989 A1
- EP 3273292 A1
- US 4689387 A
- US 4775733 A
- US 5059673 A
- US 5087758 A
- US 5191055 A
- EP 0614957 A
- US 4211823 A
- US 5015523 A
- FR 2702486
- EP 2092377 A
- US 2007238804 A
- EP 2787385 A
- WO 2014060552 A
- EP 2604415 A
- WO 2017176921 A
- EP 2287385 A
- US 7008690 B
- WO 2018010809 A1

**Non-patent literature cited in the description**

- **EYAL BEN-ELIEZER et al.** *APPLIED OPTICS*, 10 May 2005, vol. 44